# EUROPÄISCHE PATENTSCHRIFT

(11) **EP 0 587 672 B1**
(45) Veröffentlichungstag und Bekanntmachung des Hinweises auf die Patenterteilung: **14.02.1996**
(21) Anmeldenummer: 92911605.1
(22) Anmeldetag: 03.06.1992
(51) Int. Cl.: C01B 13/32, C01G 25/02, C01F 11/02, C01F 7/02, C01F 17/00, C01G 23/00, C01G 33/00, C01G 35/02

(54) **VERFAHREN ZUR HERSTELLUNG NANOSKALIGER OXIDTEILCHEN**
METHOD OF PRODUCING NANOMETER-SIZED OXIDE PARTICLES
PROCEDE POUR LA PRODUCTION DE PARTICULES D'OXYDE A L'ECHELLE NANOMETRIQUE

(30) Priorität: 03.06.1991 DE 4118185
(43) Veröffentlichungstag der Anmeldung: 23.03.1994
(73) Patentinhaber: INSTITUT FÜR NEUE MATERIALIEN gemeinnützige GmbH, D-66123 Saarbrücken (DE)
(72) Erfinder: SCHMIDT, Helmut, D-6604 Saarbrücken-Güdingen (DE); NASS, Rüdiger, D-6601 Riegelsberg (DE); BURGARD, Detlef, D-6620 Völklingen (DE)
(74) Vertreter: Barz, Peter, Dr.
(86) Internationale Anmeldenummer: EP9201234
(87) Internationale Veröffentlichungsnummer: WO9221611

(56) Entgegenhaltungen:
- EP-A- 0 280 673
- EP-A- 0 304 243
- EP-A- 0 363 927
- JOURNAL OF THE AMERICAN CERAMIC SOCIETY. Bd. 73, Nr. 9, September 1990, COLUMBUS US Seiten 2760 - 2763; SANGEETA D. ET AL: 'NANOMETER-SIZED ZRO2
- PARTICLES PREPARED BY A SOL-EMULSION-GEL METHOD'

## Beschreibung

Das Interesse an den Eigenschaften nanoskaliger Materialien ist in letzter Zeit enorm gestiegen. Bei verschiedenen Metallen wurde gezeigt, daß viele physikalische Eigenschaften nanokristalliner kompakter Materialien sich erheblich von denen entsprechend gröberer kristalliner Produkte unterscheiden (z.B. Dichte, spezifische Wärme, chemische Eigenschaften). Dies wird auf den hohen Anteil an Grenzflächenatomen zurückgeführt, die sich nicht im "normalen" Zustand der Atome des "inneren" kristallinen Gitters befinden. Während die Metalle schon relativ gut untersucht sind, ist der Stand der Forschung bei den Oxiden noch deutlich weniger weit entwickelt. Allerdings zeigen theoretische Überlegungen und erste experimentelle Befunde an TiO₂, daß nanokristalline Materialien mit Kristallitgrößen im Bereich von 1 bis 10 nm bereits bei niedrigen Temperaturen ein mit metallischen Werkstoffen vergleichbares plastisches Verhalten aufweisen können.

Durch andere Untersuchungen an nanoskaligen keramischen Materialien wurden im Vergleich zu konventionellen sub-µm-Pulvern auch deutlich niedrigere Sintertemperaturen nachgewiesen. So wurde z.B. gezeigt, daß ZrO₂-Pulver mit Kristallitgrößen um 5 nm bereits bei 1100°C zu 94% der theoretischen Dichte sintern. Gegenüber heute verfügbaren sub-µm-Pulvern bedeutet dies eine Absenkung der Sintertemperatur um über 500°C.

Neben grundlegenden Werkstoff-physikalischen Phänomenen eröffnen sich auch interessante Aspekte im Bezug auf Werkstoffbezogene Eigenschaften von aus nanokristallinen Oxiden hergestellten keramischen Materialien. Über die genannten verfahrenstechnischen Aspekte hinaus (niedrige Sintertemperatur) sind vor allem die Fragen der Duktilität und der Homogenität des Gefüges von Interesse. Gelingt es, solche Gefüge auch bei höheren Temperaturen zu stabilisieren und können die aus den bisherigen Arbeiten erhaltenen Hinweise bestätigt werden, so sollten über nanokristalline Gefüge Keramiken mit interessanten neuen Eigenschaften zugänglich sein.

Vor diesem Hintergrund finden nanoskalige keramische Pulver als Ausgangsprodukte ein zunehmendes Interesse, und es sind in der Literatur verschiedene Verfahren zu ihrer Herstellung beschrieben worden. Neben verschiedenen Gasphasenprozessen sind dies in jüngster Zeit auch chemische Synthesen aus der Lösung, wie der Sol-Gel-Prozeß, die Hydrothermalsynthese und die Emulsionstechnik.

Bei diesen Verfahren werden über Wachstumsprozesse (meist Kondensationsreaktionen aus molekularen Vorläufern wie gelösten Salzen, Hydroxiden oder Alkoxiden) Partikel erzeugt. Kritisch sind die Kontrolle der Größe der Teilchen und die Vermeidung des "Zusammenwachsens" solcher Partikel, da sie aufgrund ihrer Genese über hochreaktive Oberflächen verfügen.

Der Sol-Gel-Prozeß ist ein Syntheseverfahren, bei dem zunächst durch Hydrolyse- und Kondensationsreaktionen geeigneter Ausgangsverbindungen (Salze, Metallalkoholate) in einem Lösungsmittel ein Sol, d.h., lösliche Polykondensate mit oligomerer oder polymerer Struktur oder kolloidale Lösungen hergestellt werden. Die fortschreitende Reaktion führt dann zur Bildung eines festen Körpers, dem Gel, welches anschließend z.B. durch eine thermische Nachbehandlung in ein kristallines keramisches Pulver überführt werden kann. Durch geeignete Reaktionsführung ist es jedoch auch möglich, den Prozeß im Stadium des Sols "einzufrieren" und auf diesem Weg kleinste Partikel mit mittleren Durchmessern im Bereich von 1 bis 50 nm zu erzeugen. Der hohe Anteil von OH-Gruppen an der Partikeloberfläche macht eine agglomeratfreie Isolation und Calcinierung von nanoskaligen Pulvern jedoch schwierig, so daß bisher nur ein Teil der Möglichkeiten des Sol-Gel-Verfahrens genutzt werden kann.

Bei einem anderen Verfahren werden aus wäßrigen Salzlösungen über kontrollierte Wachstumsreaktionen in der Lösungsphase monodisperse Partikel hergestellt. Die Partikelgröße und Partikelform wird dabei durch verschiedene Parameter bestimmt. Die Bildung monodisperser Partikel macht aber eine sehr exakte Abstimmung der Reaktionsparameter nötig und für ihre Entstehung steht nur ein sehr enger Bereich zur Verfügung. Zur Vermeidung von Agglomeraten in der Lösung wird in hochverdünnten Lösungen (10⁻⁴ bis 10⁻⁶ Mol/l) gearbeitet, so daß sich dieses Verfahren wenig für die Pulverherstellung eignet.

Bei der Hydrothermalsynthese werden bei erhöhten Temperaturen und Drucken in Gegenwart von geeigneten Fällungsreagenzien aus anorganischen Salzen die entsprechenden Oxide bzw. Hydroxide gefällt. Durch geeignete Variation der Reaktionsparameter können kristalline Produkte mit Primärkristallitgrößen bis hinab zu wenigen nm erhalten werden. Die Verarbeitung dieser Pulver ist jedoch aufgrund des Vorliegens harter Agglomerate, die während der Synthese entstehen, schwierig.

Die europäische Patentanmeldung EP-A-363927 offenbart ein Verfahren zur Herstellung einer kugelförmigen Oxidteilchen (bevorzugte Größe 1 bis 2 µm) enthaltenden Suspension, bei dem eine wässrige Phase, die mindestens ein als Oxid(hydrat) ausfällbares Element in gelöster Form oder in Form eines Sols enthält, in einer organischen Flüssigkeit emulgiert wird. In dieser organischen Flüssigkeit wird mindestens eine als Phasentransferkatalysator wirkende Verbindung gelöst. Die gemäß EP-A-363927 verwendeten Emulgatoren weisen im allgemeinen einen HLB-Wert von unter 7 auf, in Einzelfällen einen Wert über 11 oder darüber.

Wenngleich auch bereits sehr feine Pulver mit Hilfe der Emulsionstechnik hergestellt worden sind, gibt es bislang noch kein allgemein anwendbares und verläßliches Verfahren, das es ermöglicht, auf diesem Weg Teilchen mit einer Größe von 10 bis 100 nm, insbesondere 5 bis 50 nm, zu erzeugen. Der vorliegenden Erfindung lag somit die Aufgabe zugrunde, ein Verfahren zur Herstellung nanoskaliger Oxidteilchen enthaltender Suspensionen bereitzustellen, die nach geeigneter Entfernung der Lösungsmittel, Trocknung und gegebenenfalls Calcinierung Oxidpulver mit einer durchschnittlichen Teilchengröße von nicht mehr als 50 nm liefern.

Erfindungsgemäß wird diese Aufgabe gelöst durch ein Verfahren zur Herstellung einer nanoskalige Oxidteilchen enthaltenden Suspension, bei dem man eine wäßrige Phase, die mindestens ein als neutrales, saures oder basisches Oxid(hydrat) ausfällbares Element in gelöster Form enthält, in einer organischen Flüssigkeit unter Bildung einer Wasser-in-Öl-Emulsion (W/O-Emulsion) emulgiert und dann durch Änderung (Anhebung oder Senkung) des pH-Wertes in den emulgierten Wassertröpfchen die Ausfällung des Oxids in den Tröpfchen bewirkt, das dadurch gekennzeichnet ist, daß man als Emulgator eine Mischung aus mindestens einem nicht-ionischen Emulgator mit einem HLB-Wert von unter 7 und mindestens einem nicht-ionischen Emulgator mit einem HLB-Wert über 9 verwendet, wobei der HLB-Wert der resultierenden Emulgatormischung im Bereich von 7,5 bis 11,5 liegt, und daß das Volumenverhältnis von eingesetzter Emulgatormischung zu wäßriger Phase 2,5:1 bis 0,8:1 beträgt.

Das erfindungsgemäße Verfahren wird im folgenden näher erläutert.

Die in der organischen Flüssigkeit zu emulgierende wäßrige Phase enthält mindestens ein Element, das durch Anheben oder Senken des pH-Wertes als Oxid(hydrat) ausgefällt werden kann, in gelöster Form.

Erfindungsgemäß bevorzugte Elemente sind solche, die zur Herstellung von Glas bzw. Keramik geeignet sind. Als Beispiele hierfür wären zu nennen Metalle im allgemeinen, insbesondere Alkalimetalle (z.B. Li, Na, K), Erdalkalimetalle (z.B. Mg, Ca, Sr und Ba), andere Hauptgruppen-Metalle, wie z.B. Al, Sn, Pb, Bi, Nebengruppen-Metalle wie z.B. Ti, Zr, V, Mn, Nb, Ta, Cr, Mo, W, Fe, Co, Ni, Cu, Zn, und die Lanthaniden, wie z.B. Ce und Y.

Bevorzugte Beispiele für auszufällende Oxide sind u.a. ZrO₂, TiO₂, Bleizirkonattitanat (PZT), BaTiO₃, Al₂O₃ YBa₂Cu₃O₇, Cr₂O₃ und Fe₂O₃.

Bevorzugt liegen die obigen Elemente in der emulgierten wäßrigen Phase in Form ihrer hydrolysierbaren Salze in Salzkonzentrationen von mindestens 20 und insbesondere mindestens 25 Gew.-% vor. Im Hinblick auf eine wirtschaftliche Ausbeute sollte die Salzkonzentration nicht zu niedrig sein, insbesondere nach Möglichkeit 10 Gew.-% nicht unterschreiten, obwohl selbstverständlich im Falle von in Wasser weniger gut löslicher Verbindungen auch Konzentrationen von 5 Gew.-% und darunter akzeptabel sind. Gesättigte Salzlösungen können (und sollten wenn möglich auch) eingesetzt werden.

Unter den Salzlösungen sind diejenigen bevorzugt, die (im Falle von basischen Oxid(hydraten)) als Anionen solche aufweisen, die sich thermisch leicht zersetzen lassen, insbesondere Nitrate, Sulfate und Anionen organischer Säuren, wie Acetate und Formiate. Es können jedoch auch andere Anionen eingesetzt werden, wie z.B. die Halogenide, insbesondere die Chloride und Bromide. Wolframate, Molybdate und Silicate sind Beispiele für Anionen, die im Sauren (pH <7) zu Niederschlägen führen.

Wäßrige Salzlösungen lassen sich nach vielen dem Fachmann geläufigen Verfahren herstellen. Im einfachsten Fall kann das entsprechende Salz einfach in Wasser aufgelöst werden. Eine andere Möglichkeit ist z.B. die Dialyse von Salzlösungen.

Neben Salzlösungen können insbesondere auch wäßrige Sole eingesetzt werden. Derartige Sole können z.B. hergestellt werden, indem man ein Metallalkoxid, das in einem kurzkettigen Alkohol gelöst ist, durch Zugabe von wäßriger Säure hydrolysiert. Käufliche Sole sind z.B. SiO₂-Sole, Wasserglas und Böhmitsole.

Zwecks Bildung einer Wasser-in-Öl-Emulsion wird die wäßrige Phase in einer organischen Flüssigkeit emulgiert. Erfindungsgemäß erfolgt die Emulgierung in Gegenwart eines speziellen nicht-ionischen Emulgatorsystems, auf das weiter unten näher eingegangen wird.

Als organische Flüssigkeit eignen sich prinzipiell alle unter den Reaktionsbedingungen inerten, mit Wasser praktisch nichtmischbaren organischen Lösungsmittel. Beispiele hierfür sind (gegebenenfalls halogenierte, insbesondere fluorierte und/oder chlorierte) aliphatische und aromatische Kohlenwasserstoffe (z.B. Hexan, Heptan, Decan, Benzinfraktionen, Kerosin, Mineralöl, Benzol, Toluol, Xylol), höhere Alkohole (z.B. Alkohole mit 5 bis 7 Kohlenstoffatomen), Ether (wie z.B. Tetrahydrofuran, Dioxan, von Polyethylenglykol und Polypropylenglykol abgeleitete Ether), Ester und Ketone.

Erfindungsgemäß bevorzugt werden als organische Flüssigkeit Benzinfraktionen (Siedebereich z.B. 50 bis 70°C oder 100 bis 140°C), Hexan, Heptan, Toluol, die Xylole und halogenierte Kohlenwasserstoffe, wie z.B. Chloroform und Chlorbenzol. Auf jeden Fall sollte der Siedepunkt des Lösungsmittels unter seiner Zersetzungstemperatur liegen. Da das organische Lösungsmittel später vorzugsweise quantitativ entfernt wird, sollte es keinen zu hohen Siedepunkt aufweisen, insbesondere keinen Siedepunkt, der wesentlich über 180°C liegt. Andererseits sollte der Siedepunkt auch nicht zu niedrig, d.h. nicht wesentlich unter 50°C sein, da sich sonst die später gegebenenfalls vorzunehmende Abtrennung des Wassers schwierig gestalten kann.

Das beste Lösungsmittel für ein vorgegebenes System hängt von vielen Faktoren ab, kann aber vom Fachmann durch einfache Routineversuche ermittelt werden.

Erfindungsgemäß wird als Emulgator ein Gemisch von mindestens zwei nicht-ionischen Emulgatoren eingesetzt. Dabei weist mindestens einer der Emulgatoren vorzugsweise einen HLB-Wert unter 5 und insbesondere unter 3 auf, während mindestens ein anderer Emulgator vorzugsweise einen HLB-Wert über 10 und insbesondere über 11 besitzt (z.B. von 11 bis 15).

Vorzugsweise wird eine Mischung aus lediglich zwei Emulgatoren verwendet. In jedem Fall muß die resultierende Emulgatormischung einen HLB-Wert im Bereich von 7,5 bis 11,5, vorzugsweise 8,5 bis 10,5 aufweisen. Besonders bevorzugt ist ein HLB-Wert von 8,9 bis 10,0. Die Mengenverhältnisse der Emulgatoren ergeben sich somit aus dem HLB-Wert der individuellen Emulgatoren einerseits und dem gewünschten HLB-Wert der Mischung andererseits.

Die erfindungsgemäß einsetzbaren nicht-ionischen Emulgatoren sind dem Fachmann bekannt. Konkrete Beispiele für erfindungsgemäß besonders geeignete nicht-ionische Emulgatoren sind Sorbitanester von Laurin-, Palmitin-, Stearin- und Ölsäure (z.B. die unter dem Warenzeichen SPAN® vertriebenen), Polyoxyethylenderivate dieser Ester (z.B. die unter dem Warenzeichen TWEEN® vertriebenen) und Alkyl (phenol)polyglykolether und Fettsäurepolyglykolester (z.B. die unter dem Warenzeichen EMULSOGEN® vertriebenen). Als weitere Beispiele können Emulgatoren vom ARLACEL®-, PLURONIC®-, EMULAN®-, MALOPHEN®-und MALOVET®-Typ genannt werden. Selbstverständlich stellen die soeben genannten Emulgatoren nur eine kleine Auswahl aus den erfindungsgemäß verwendbaren Emulgatoren dar.

Bei der Auswahl der Emulgatoren sollten vorzugsweise solche berücksichtigt werden, die sich strukturell möglichst ähnlich sind. Dies ist z.B. bei dem Paar Tween® 80/Emulsogen® OG der Fall. Tween® 80 (HLB-Wert = 15) ist ein Polyoxyethylen (20)-Sorbitanmonooleat, während Emulsogen® OG (HLB-Wert = 3) ebenfalls ein Ölsäureester (Ölsäurepolyglycerinester) ist.

Von Vorteil ist es weiterhin, wenn zwischen Dispergiermedium (Ölphase) und Emulgatorsystem ebenfalls eine möglichst große strukturelle Ähnlichkeit vorhanden ist. Zum Beispiel eignet sich für das obige Emulgatorpaar Petrolether wesentlich besser als etwa Xylol.

Die erfindungsgemäß verwendete Emulgatormischung wird in einem Volumenverhältnis zur wäßrigen Phase von 2,5:1 bis 0,8:1, vorzugsweise 2:1 bis 1:0,9 und insbesondere 1,5:1 bis 1:1 verwendet.

Der erfindungsgemäß eingesetzte Emulgator wirkt unter anderem als Schutzkolloid und kann demgemäß die Agglomeration von nanoskaligen Partikeln verhindern. Dies kann sich auch beim Calcinieren der feinen Partikel positiv auswirken, da sich die vorliegenden Emulgatoren erst bei Temperaturen ≥ 400°C voll-ständig zersetzen und bei diesen Temperaturen die Desaktivierung der Partikeloberfläche durch Abspaltung von H₂O schon weit fortgeschritten ist, was ein Zusammenwachsen der Partikel verhindert bzw. minimiert.

Insbesondere wenn auf die Herstellung von monodispersen Pulvern Wert gelegt wird, kann es von Vorteil sein, neben der erfindungsgemäß verwendeten Emulgatormischung noch ein Hilfsadditiv zu verwenden, das bevorzugt ausgewählt wird aus höheren Alkoholen, insbesondere solchen mit 8 bis 15 Kohlenstoffatomen, wie z.B. Octanol, Decanol, Dodecanol und Tetradecanol. Vorzugsweise wird ein derartiges Hilfsadditiv in Mengen von 0,1 bis 15, insbesondere 0,5 bis 10, ganz besonders bevorzugt 1 bis 5 Volumen-%, bezogen auf die Emulsion, eingesetzt.

Die Verwendung eines Hilfsadditives (z.B. Octanol) wirkt sich in vielerlei Hinsicht positiv aus und wird deshalb erfindungsgemäß (insbesondere bei höheren W/O-Verhältnissen) bevorzugt. Insbesondere ermöglicht es die Verwendung eines derartigen Hilfsadditivs, die zu verwendende Emulgatormenge erheblich zu senken, ohne daß dadurch gleichzeitig eine Vergrößerung der emulgierten Wasssertröpfchen in Kauf genommen werden muß. Dies ist vom wirtschaftlichen Standpunkt aus vorteilhaft, da dadurch entweder bei konstanter Tröpfchengröße Emulgator eingespart werden kann (was auch zu einer geringeren Umweltbelastung führt) oder bei konstanter Emulgatormenge die Tröpfchengröße verringert werden kann (was sonst nur durch eine vom wirtschaftlichen Standpunkt aus gesehen unerwünschte Erniedrigung des Volumenverhältnisses wäßrige Phase/Ölphase möglich ist).

Durch Zusatz eines Hilfsadditivs läßt sich auch die Salzkonzentration in den Wassertröpfchen erhöhen, ohne die Stabilität der Emulsion zu gefährden, was eine Erhöhung der Pulverausbeute ermöglicht.

Schließlich kann man durch Zusatz eines Hilfsadditivs in vielen Fällen eine ansonsten bimodale Teilchengrößenverteilung in eine monomodale Verteilung umwandeln.

Hinsichtlich des Volumenverhältnisses Hilfsadditiv/Emulgatorsystem wäre zu bemerken, daß Werte >1:1 in der Regel zu keinen stabilen Emulsionen führen. Ein optimales Verhältnis liegt in der Regel im Bereich von 0,05:1 bis 0,5:1, insbesondere von 0,07:1 bis 0,3:1.

Besonders bei großen W/O-Verhältnissen kann eine zu hohe Emulgatorkonzentration überdies eine (unerwünschte) bimodale Teilchengrößenverteilung nach sich ziehen.

Das Volumenverhältnis wäßrige Phase/Ölphase (organische Flüssigkeit) beträgt erfindungsgemäß vorzugsweise 0,1:1 bis 0,5:1 und insbesondere 0,15:1 bis 0,3:1. Während es keinen praktischen Minimalwert für den Volumenanteil der wäßrigen Phase gibt, wird die Obergrenze des Volumenanteils der wäßrigen Phase durch den Inversionspunkt bestimmt (d.h. den Übergang von einer W/O-Emulsion in eine O/W-Emulsion). Der Inversionspunkt ist für jedes System spezifisch und kann auf einfachem Wege bestimmt werden (z.B. durch Bestimmung der Änderung der Leitfähigkeit) . Allgemein kann jedoch festgestellt werden, daß mit steigendem Wasseranteil die Stabilisierung kleinster Tröpfchen immer schwieriger wird. Außerdem kann ein starker Anstieg der Viskosität Probleme bei der Fällung bereiten, insbesondere bei Verwendung von Phasentransferkatalysatoren (siehe unten), da die Austauschgeschwindigkeit derselben mit steigender Viskosität stark abnimmt. Es sind daher möglichst dünnflüssige Emulsionen erstrebenswert und dazu sollte der Volumenanteil der wäßrigen Phase an der Emulsion 30% nicht überschreiten. Weiterhin hängt der Existenzbereich einer stabilen (Mikro)emulsion sowohl vom Verhältnis wäßrige Phase/Ölphase als auch vom Verhältnis Emulgatormischung/wäßrige Phase (und von der Zugabe eines Hilfsadditivs) ab.

Zur Herstellung der Emulsion können dem Fachmann bekannte Techniken eingesetzt werden. Z.B. kann man das Emulgatorsystem zunächst in der organischen Flüssigkeit lösen und dann die wäßrige Phase auf einmal oder schrittweise z.B. unter Rühren zugeben. Die Herstellung der Emulsion erfolgt vorzugsweise bei Raumtemperatur oder leicht erhöhten Temperaturen (z.B. 40 bis 50°C). Es können z.B. Ultraschallgeräte oder Rotor-Stator-Systeme mit hoher Schergeschwindigkeit verwendet werden, aber auch Magnetrührer (für Tröpfchengrößen um 500 nm und darunter). Die Größe der entstehenden Oxidteilchen wird insbesondere durch die Tröpfchengröße der Emulsion und den Feststoffgehalt der wäßrigen Lösung bestimmt. Je größer die emulgierten Wassertröpfchen, desto größer werden auch die Oxidteilchen in der Suspension. Vorzugsweise liegt die Obergrenze für die Tröpfchengröße in der Emulsion bei 500 nm. Die bevorzugte Untergrenze für die Tröpfchengröße hängt von der gewünschten Größe der Oxidteilchen ab. Es ist jedoch zu berücksichtigen, daß die Teilchengröße nach der Entfernung des Wassers um ein Vielfaches kleiner sein kann als die ursprüngliche Tröpfchengröße.

Zur Bildung der W/O-Emulsion kann z.B. auch so vorgegangen werden, daß man eine O/W-Emulsion durch Zugabe von organischer Flüssigkeit in eine W/O-Emulsion umwandelt.

Die im erfindungsgemäßen Verfahren erforderliche Änderung (Erhöhung bzw. Senkung) des pH-Wertes in den emulgierten Wassertröpfchen zwecks Ausfällung der neutralen,sauren oder basischen Oxid(hydrat)e kann prinzipiell durch Zugabe einer jeden basischen bzw. sauren Verbindung, die sich in der wäßrigen Phase in ausreichendem Maße löst, bewerkstelligt werden. Vorzugsweise wird im erfindungsgemäßen Verfahren die pH-Wert-Erhöhung durch Zugabe von (gegebenenfalls gasförmigem) Ammoniak und/oder organischen Basen (z.B. Aminen wie Dimethylamin, Triethylamin, usw.) bewerkstelligt. Diese Verbindungen haben den Vorteil, daß sie später durch entsprechende thermische Behandlung der Oxidteilchen rückstandsfrei daraus entfernt werden können. Zur pH-Wert-Senkung können z.B. anorganische und organische Säuren wie HCl und Essigsäure eingesetzt werden. Dies gilt insbesondere für Oxidsysteme, die keine Anionen einbinden, wie z.B. MoO₃, WO₃, SiO₂/TiO₂, GeO₂/TiO₂ usw.

Gemäß einer besonders bevorzugten Ausführungsform der vorliegenden Erfindung wird zur Anhebung oder Absenkung des pH-Wertes eine als Phasentransferkatalysator wirkende Verbindung zur organischen Phase gegeben, wobei diese Verbindung die Fähigkeit hat, die in den emulgierten Wassertröpfchen vorhandenen Anionen bzw. Kationen (z.B. NH₄+) durch Hydroxidionen bzw. Protonen zu ersetzen und so die Ausfällung des Oxid(hydrat)s in den Tröpfchen zu bewirken.

Die als Phasentransferkatalysator wirkende Verbindung kann im Falle der Anhebung des pH-Wertes z.B. eine quaternäre Ammonium-, Phosphonium- oder andere Oniumverbindung sein. Auch Kronenether und Kryptanden sind erfindungsgemäß u.a. geeignet.

Wegen ihrer leichten Zugänglichkeit und ihres Preises werden Ammoniumverbindungen bevorzugt. Besonders bevorzugte Beispiele sind die quaternären Ammoniumsalze, insbesondere Tetraalkylammoniumchloride, -bromide und -jodide. In diesen Tetraalkylammoniumsalzen weisen die Alkylreste, die gleich oder verschieden sein können, vorzugsweise 1 bis 20 Kohlenstoffatome auf. Die Gesamtkohlenstoffzahl sollte so hoch sein, daß sich die Salze in Wasser praktisch nicht mehr lösen und liegt deshalb bevorzugt über 15, insbesondere über 20. Als besonders geeignete Vertreter haben sich Tetraalkylammoniumsalze erwiesen, die über zwei bis drei lange Reste (z.B. mit 8 bis 20 Kohlenstoffatomen) und einen oder zwei kurze Alkylgruppen (z.B. ein oder zwei Methyl- oder Ethylgruppen) verfügen. Ein Beispiel hierfür ist die Didodecyldimethylammoniumbromid. Eine weitere bevorzugte Klasse von Tetraalkylammoniumsalzen sind diejenigen, die über einen langen Kohlenwasserstoffrest (z.B. mit 16 oder mehr Kohlenstoffatomen) und drei kurze Alkylgruppen (z.B. Methyl- oder Ethylgruppen) verfügen. Ein Beispiel hierfür ist Octadecyltrimethylammoniumbromid. Allgemein kann gesagt werden, daß Tetraalkylammoniumsalze mit voneinander verschiedenen Resten in der Regel vorteilhafter sind als solche mit vier identischen Resten. Die Alkylreste können auch substituiert sein, z.B. durch eine Phenylgruppe. Bei der Wahl des Tetraalkylammoniumsalzes muß auch bedacht werden, daß Salze mit langen Alkylketten als Tenside wirken können. Demgemäß muß durch einfache Routineversuche für jeden Einzelfall festgestellt werden, welcher Phasentransferkatalysator sich am besten eignet.

Geeignete Phasentransferkatalysatoren bei einer angestrebten Senkung des pH-Wertes sind z.B. Carbonsäuren mittlerer Kettenlänge (z.B. C₈-C₁₆), die als solche und insbesondere in Salzform eine ausreichende Löslichkeit im organischen Medium aufweisen (z.B. Stearinsäure, Laurinsäure und Ölsäure).

Die als Phasentransferkatalysator wirkende Verbindung kann in der organischen Flüssigkeit oder aber auch in der fertigen Emulsion gelöst werden. Dies kann bei Raumtemperatur oder leicht erhöhter Temperatur vorzugsweise unter Rühren geschehen. Wenn es möglich ist, die als Phasentransferkatalysator wirkende Verbindung bereits vor dem Emulgiervorgang in der organischen Phase zu lösen, so hat dies den Vorteil, daß die Wiederverwendung der organischen Phase vereinfacht wird.

Um die Auflösung des Phasentransferkatalysators in der organischen Flüssigkeit oder in der organischen Phase der Emulsion zu erleichtern, wird es bevorzugt, ihn vor der Zugabe zum System in einem möglichst kleinen Volumen eines guten Lösungsmittels, insbesondere eines Alkohols mit 4 bis 8 Kohlenstoffatomen, vorzugsweise Hexanol, Heptanol oder Octanol zu lösen. Das Lösungsmittel für den Phasentransferkatalysator sollte praktisch wasserunlöslich sein, damit in der Emulsion eine saubere Phasentrennung sichergestellt wird und ist vorzugsweise identisch mit dem oben beschriebenen Hilfsadditiv.

Die als Phasentransferkatalysator wirkende Verbindung, z.B. das Tetraalkylammoniumsalz, kann bereits in der Hydroxidform und auch in stöchiometrischen Mengen, bezogen auf die in der wässrigen Phase vorhandenen auszutauschenden Anionen, eingesetzt werden. Bevorzugt wird die als Phasentransferkatalysator wirkende Verbindung jedoch in unterstöchiometrischen Mengen, insbesondere 1 bis 20%, bevorzugt 5 bis 10%, bezogen auf die in der wässrigen Phase vorliegenden auszutauschenden Anionen, verwendet. In diesem Fall sollte der Phasentransferkatalysator selbstverständlich absatzweise oder kontinuierlich regeneriert werden. Gemäß einer besonders bevorzugten Ausführungsform der vorliegenden Erfindung erfolgen Austausch der Anionen und Regenerierung des Phasentransferkatalysators gleichzeitig. Wenn der Phasentransferkatalysator gleich zu Beginn in der Hydroxidform vorliegt, hat dies den zusätzlichen Vorteil, daß der erste Austausch spontan erfolgt und sich sofort an der Oberfläche der Wassertröpfchen Hydroxide bilden, was die Emulsion wesentlich stabilisiert, so daß diese Vorgehensweise besonders bei wenig stabilen Emulsionen zu empfehlen ist.

Als Regeneriermittel für die als Phasentransferkatalysator wirkende Verbindung werden vorzugsweise (anionische bzw. kationische) Ionenaustauscherharze verwendet.

Erfindungsgemäß geeignete Ionenaustauscherharze sind die gebräuchlichen und im Handel erhältlichen. Auch anorganische Ionenaustauscher können Verwendung finden.

Die Regenerierung der als Phasentransferkatalysator wirkenden Verbindung kann auf verschiedene Art und Weise durchgeführt werden. Zum Beispiel kann man die Emulsion zusammen mit dem Phasentransferkatalysator durch eine Ionenaustauschersäule leiten, wobei man die Verweilzeit der Emulsion auf der Säule so bemißt, daß Austausch und Regenerierung des Phasentransferkatalysators vollständig sind. Zu diesem Zweck kann man die Emulsion auch mehrmals über die Säule leiten. Wie bereits oben erwähnt, ist es aber auch möglich, den Phasentransferkatalysator in stöchiometrischen Mengen einzusetzen, ihn nach erfolgtem Austausch abzutrennen, zu regenerieren und erneut einzusetzen.

Nach der (vollständigen) Ausfällung des gewünschten Oxid(hydrat)s liegt die ursprünglich eingesetzte Emulsion in Form einer Suspension von nanoskaligen Oxid(hydrat)teilchen vor. Aus dieser Suspension wird das Wasser vorzugsweise abgetrennt, um die Teilchen zu verdichten und zu stabilisieren. Zu diesem Zweck wird das Wasser z.B. azeotrop (vorzugsweise bei Normaldruck) abdestilliert. Geringe Mengen von in der wässrigen Phase gelösten Hydroxiden fallen durch den Wasserentzug noch aus. Azeotrope Gemische mit 20 bis 40% Wasser erreicht man z.B. durch den Zusatz von wenig (z.B. 10 Volumenprozent der Wasserphase) Butanol und/oder Pentanol, also Alkoholen, die noch in einem gewissen Maße mit H₂O mischbar sind, zu WasserPetroleumbenzin-Gemischen. Die Abtrennung des Wassers aus dem Destillat kann durch eine Wasserfalle nach Dean-Stark erfolgen. Die organische Phase wird vorzugsweise ebenfalls abdestilliert und dann gegebenenfalls zurückgeführt.

Die so hergestellten Oxidteilchen können dann getrocknet werden. Die so erhaltenen Pulver können in üblicher Weise weiterverarbeitet werden, indem man sie z.B. calciniert und anschließend gegebenenfalls durch Pressen und Sintern in Formkörper umwandelt. Die erhaltene Pulversuspension kann aber auch direkt oder nach der Wasserentfernung weiterverarbeitet werden, indem man sie z.B. einer Filterpresse zuführt und dort zu Formkörpern verarbeitet.

Das folgende Beispiel erläutert das erfindungsgemäße Verfahren, ohne es zu beschränken.

### BEISPIEL 1

Zu 50 ml Petrolether (Siedebereich 50 bis 70°C) wurden je 5 ml EMULSOGEN® OG und TWEEN® 80 gegeben. Nach vollständiger Auflösung der Emulgatoren wurden 10 ml Wasser, in denen 10 Gew.-% Cr(NO₃)₃ oder FeCl₃ oder Al(NO₃)₃ gelöst waren, zugetropft. Anschließend wurden 3 ml n-Octanol zugesetzt. Eine Ultraschallbehandlung des resultierenden Zweiphasensystems führte zu einer klaren durchscheinenden Emulsion. Die Fällung der entsprechenden Hydroxide bzw. Oxide erfolgte, indem gasförmiges NH₃ durch die Emulsion geleitet wurde. Durch die Fällung der Oxide bzw. Hydroxide nahmen die Emulsionen die typische Farbe dieser Verbindungen an, waren aber unverändert transparent. Das Wasser wurde durch azeotrope Destillation entfernt und der Petrolether wurde anschließend ebenfalls abdestilliert. Es wurde eine durchscheinende Masse erhalten, in der die Pulverpartikel dispergiert waren. Durch Kalzinieren zwischen 200 und 400°C (z.B. 5 h bei 350°C) wurde daraus ein Pulver erhalten.

In den obigen Emulsionen betrug die Tröpfchengröße am Anfang ungefähr 260 nm und verringerte sich nach der Reaktion mit Ammoniak nur wenig auf 200 nm. Im Falle des Chromsalzes betrug die Partikelgröße nach der azeotropen Entfernung des Wassers jedoch nur noch ca. 20 nm. Im Falle von Al(NO₃)₃ wurde nach Kalzinieren des Rückstandes (8 h bei 350°C) Böhmit mit einer einheitlichen Teilchengröße von 20 nm erhalten und im Falle von FeCl₃ betrug die Teilchengröße des Fe₂O₃-Pulvers nach 5 h bei 350°C ebenfalls einheitlich 20 nm.

Daraus kann man ersehen, daß die Präzipitate in den Tröpfchen sehr locker gepackt sind und durch einfache azeotrope Destillation verdichtet werden können. Zur Herstellung nanoskaliger Pulver ist es also nicht nötig, daß die Tröpfchengröße der Ausgangsemulsion bereits genauso gering ist wie die gewünschte Partikelgröße.

### BEISPIEL 2

In Beispiel 1 wurde als wäßrige Phase z.B. eine 10 Gew.-%ige wäßrige Lösung von z.B. Cr(NO₃)₃ eingesetzt. Da dieses Chomsalz in Wasser sehr gut löslich ist, kann über die entsprechende emulgierte Salzlösung das Oxid in guter Ausbeute hergestellt werden. Von in Wasser schwerlöslichen Salzen können jedoch nur sehr verdünnte Lösungen hergestellt werden und aus den entsprechenden Emulsionen können daher die Oxidpulver auch nur in geringer Ausbeute synthetisiert werden. Um auch derartige Oxidpulver in guter Ausbeute herstellen zu können, muß deshalb ein anderer Weg zur Herstellung der wäßrigen Phase beschritten werden, z.B. über die Herstellung eines Sols.

55 g einer Lösung von 70 Gew.-% Zr(O-n-C₃H₇)₄ in n-Propanol wurden in 400 ml Ethanol gelöst und es wurde eine Mischung aus 11 ml HNO₃ (65 Gew.-%) und 12,5 ml Wasser zugetropft. Das Lösungsmittel wurde daraufhin bei 50°C und 20 kPa entfernt. Nach Zugabe von 249 ml H₂O entstand ein Sol, das 10 Gew.-% Zr-Salz enthielt. Dieses Sol wurde in Petrolether emulgiert, wobei das Volumenverhältnis Sol:Petrolether 0,2:1 betrug. Die organische Phase zeigte dabei ein Volumenverhältnis Petrolether/Emulgator (wie in Beispiel 1)/n-Octanol von 10:1:0,6.

Durch Einleiten von Ammoniakgas in die Emulsion wurde Feststoff gebildet, worauf nach Zugabe von 10 Vol-% n-Butanol (bezogen auf die wäßrige Phase) das Wasser azeotrop abdestilliert und dadurch die Suspension verdichtet wurde. Nach Abziehen des Lösungsmittels und Kalzinieren des Rückstandes (5 h bei 350°C) wurde ein ZrO₂-Pulver erhalten. Bei der Verdichtung des Präzipitates verringerte sich die Partikelgröße von 240 nm auf 10 nm. Das kalzinierte Pulver wies ebenfalls eine (sehr einheitliche) Partikelgröße von ca. 10 nm auf. Die einzelnen Partikel waren nur noch sehr schwach agglomeriert, was auf die oberflächenpassivierende Wirkung des Emulgatorsystems zurückzuführen ist.

### BEISPIEL 3

Durch das im folgenden beschriebene Verfahren lassen sich auch Mehrkomponentensysteme (z.B. Y₂O₃-stabilisiertes ZrO₂) herstellen. Als wäßrige Phase diente ein Zr-Sol (vgl. Beispiel 2), in dem Y(NO₃)₃ gelöst wurde (3 - 8 Mol-%, bezogen auf Zr).

11 g einer Lösung von 70 Gew.-% Zr(O-n-C₃H₇)₄ in n-Propanol wurden in 80 ml Ethanol gelöst und es wurde eine Mischung aus 2,2 ml HNO₃ (65 Gew.-%) und 2,5 ml H₂O zugetropft. Das Lösungsmittel wurde anschließend bei 50°C und 20 kPa entfernt. Nach Zugabe von 23,76 ml Wasser, in dem 0,4 g Y(NO₃)₃ gelöst waren, entstand ein Sol, das 20 Gew.-% Salz enthielt. Der Y₂O₃-Gehalt des Zr-Sols betrug 3 Mol-%. Dieses Sol wurde in Petrolether emulgiert, wobei das Volumenverhältnis Sol : Petrolether 0,2 : 1 betrug. Die organische Phase zeigte dabei ein Volumenverhältnis Petrolether / Emulgator (wie in Bepsiel 1) / n-Octanol von 5 : 1 : 0,17.

Der Feststoff wurde durch Einleiten von Ammoniakgas in die Emulsion gebildet. Nach Zugabe von 10 Vol.-% n-Butanol (bezogen auf die wäßrige Phase) wurde das Wasser durch azeotrope Destillation entfernt und die Suspension verdichtet. Nach Entfernen des Lösungsmittels wurde der Rückstand kalziniert (5 h bei 380°C). Das erhaltene Pulver, Y₂O₃-stabilisiertes ZrO₂ (tetragonal), wies Partikelgrößen zwischen 3 und 5 nm auf. Die einzelnen Partikel waren auch hier nur noch schwach agglomeriert, was auf die oberflächenpassivierende Wirkung des Emulgators zurückzuführen ist.

## Patentansprüche

1. Verfahren zur Herstellung einer nanoskalige Oxidteilchen enthaltenden Suspension, bei dem man eine wässrige Phase, die mindestens ein als neutrales, saures oder basisches Oxid(hydrat) ausfällbares Element in gelöster Form enthält, in einer organischen Flüssigkeit unter Bildung einer Wasser-in-Öl-Emulsion emulgiert und dann durch Änderung des pH-Wertes in den emulgierten Wassertröpfchen eine Ausfällung des Oxid(hydrat)s in den Tröpfchen bewirkt, dadurch gekennzeichnet, daß man als Emulgator eine Mischung aus mindestens einem nicht-ionischen Emulgator mit einem HLB-Wert von unter 7 und mindestens einem nicht-ionischen Emulgator mit einem HLB-Wert über 9 verwendet, wobei der HLB-Wert der resultierenden Emulgatormischung im Bereich von 7,5 bis 11,5 liegt, und daß das Volumenverhältnis von eingesetzter Emulgatormischung zu wäßriger Phase 2,5:1 bis 0,8:1 beträgt.

2. Verfahren nach Anspruch 1, dadurch gekennzeichnet, daß mindestens ein Emulgator mit einem HLB-Wert unter 5 und insbesondere unter 3 verwendet wird.

3. Verfahren nach irgendeinem der Ansprüche 1 und 2, dadurch gekennzeichnet, daß mindestens ein Emulgator mit einem HLB-Wert über 10 und insbesondere über 11 verwendet wird.

4. Verfahren nach irgendeinem der Ansprüche 1 bis 3, dadurch gekennzeichnet, daß der HLB-Wert der resultierenden Emulgatormischung im Bereich von 8,5 bis 10,5 und insbesondere von 8,9 bis 10 liegt.

5. Verfahren nach irgendeinem der Ansprüche 1 bis 4, dadurch gekennzeichnet, daß das Volumenverhältnis von Emulgatormischung zu wäßriger Phase 2:1 bis 1:0,9 und insbesondere 1,5:1 bis 1:1 beträgt.

6. Verfahren nach irgendeinem der Ansprüche 1 bis 5, dadurch gekennzeichnet, daß das Volumenverhältnis wäßrige Phase/Ölphase in der Emulsion 0,1:1 bis 0,5:1 und insbesondere 0,15:1 bis 0,3:1 beträgt.

7. Verfahren nach irgendeinem der Ansprüche 1 bis 6, dadurch gekennzeichnet, daß als wäßrige Phase eine Salzlösung verwendet wird und in den Wassertröpfchen die Salzkonzentration vorzugsweise mindestens 20 Gew.-% beträgt.

8. Verfahren nach irgendeinem der Ansprüche 1 bis 7, dadurch gekennzeichnet, daß man zusätzlich zur Emulgatormischung mindestens einen aliphatischen Alkohol mit 8 bis 15 Kohlenstoffatomen, vorzugsweise in Mengen von 0,1 bis 15 Volumen-%, bezogen auf die Emulsion, und in einem Volumenverhältnis zur Emulgatormischung von höchstens 1:1 einsetzt.

9. Verfahren nach irgendeinem der Ansprüche 1 bis 8, dadurch gekennzeichnet, daß es sich bei dem als Oxid(hydrat) auszufällenden Element um mindestens eines aus der Gruppe der Erdalkalimetalle, insbesondere Barium, der Lanthaniden, insbesondere Yttrium, der Nebengruppenmetalle, insbesondere Titan, Zirkonium, Niob, Tantal und Wolfram, und/oder um Aluminium, Zinn, Blei handelt.

10. Verfahren nach irgendeinem der Ansprüche 1 bis 9, dadurch gekennzeichnet, daß als organische Flüssigkeit ein gegebenenfalls halogenierter aliphatischer oder aromatischer Kohlenwasserstoff oder eine Mischung davon eingesetzt wird.

11. Verfahren nach irgendeinem der Ansprüche 1 bis 10, dadurch gekennzeichnet, daß (wenigstens) ein basisches oder neutrales Oxid(hydrat) ausgefällt wird und der pH-Wert in den Tröpfchen angehoben wird.

12. Verfahren nach Anspruch 11, dadurch gekennzeichnet, daß die Anhebung des pH-Wertes durch Zugabe von Ammoniak und/oder eines organischen Amins oder mit Hilfe eines Phasentransferkatalysators bewerkstelligt wird.

13. Verfahren nach Anspruch 12, dadurch gekennzeichnet, daß der Phasentransferkatalysator ein Ammoniumsalz, insbesondere ein Tetra(ar)alkylammoniumhalogenid, ist.

14. Verfahren zur Herstellung von nanoskaligen Oxidteilchen, dadurch gekennzeichnet, daß man aus einer gemäß dem Verfahren irgendeines der Ansprüche 1 bis 13 hergestellten Suspension das Wasser und die organische Flüssigkeit vorzugsweise durch (azeotrope) Destillation entfernt, die erhaltenen Teilchen trocknet und gegebenenfalls calciniert.

## Claims

1. Process for the preparation of a suspension containing oxide particles in the nano-scale range, wherein an aqueous phase containing at least one element capable of being precipitated as neutral, acidic or basic oxide(hydrate) in dissolved form is emulsified in an organic liquid to form a water-in-oil emulsion and thereafter, by changing the pH value in the emulsified water droplets, the precipitation of the oxide(hydrate) in said droplets is caused, characterized in that as emulsifier a mixture of at least one non-ionic emulsifier having an HLB value of below 7 and at least one non-ionic emulsifier having an HLB value above 9 is used, the HLB value of the resulting mixture of emulsifiers ranging from 7.5 to 11.5, and that the volume ratio of the mixture of emulsifiers employed to aqueous phase is from 2.5:1 to 0.8:1.

2. Process according to claim 1, characterized in that at least one emulsifier having an HLB value below 5, and particularly below 3, is used.

3. Process according to any one of claims 1 and 2, characterized in that at least one emulsifier having an HLB value above 10, particularly above 11, is used.

4. Process according to any one of claims 1 to 3, characterized in that the HLB value of the resulting emulsifier mixture ranges from 8.5 to 10.5, and particularly from 8.9 to 10.

5. Process according to any one of claims 1 to 4, characterized in that the volume ratio of emulsifier mixture to aqueous phase is from 2:1 to 1:0.9, and particularly from 1.5:1 to 1:1.

6. Process according to any one of claims 1 to 5, characterized in that the aqueous phase/oil phase volume ratio in the emulsion is from 0.1:1 to 0.5:1, and particularly from 0.15:1 to 0.3:1.

7. Process according to any one of claims 1 to 6, characterized in that a salt solution is used as aqueous phase and the salt concentration in the water droplets is preferably at least 20 wt.-%.

8. Process according to any one of claims 1 to 7, characterized in that in addition to the emulsifier mixture at least one aliphatic alcohol having 8 to 15 carbon atoms is employed, preferably in amounts of 0.1 to 15% by volume, based on the emulsion, and at a volume ratio with respect to emulsifier mixture of at least 1:1.

9. Process according to any one of claims 1 to 8, characterized in that the element to be precipitated as oxide(hydrate) is at least one of the group of alkaline earth metals, particularly barium, lanthanides, particularly yttrium, the metals of the sub-groups, particularly titanium, zirconium, niobium, tantalum and tungsten, and/or is aluminum, tin, lead.

10. Process according to any one of claims 1 to 9, characterized in that an optionally halogenated aliphatic or aromatic hydrocarbon or a mixture thereof is employed as organic liquid.

11. Process according to any one of claims 1 to 10, characterized in that (at least) one basic or neutral oxide(hydrate) is precipitated and the pH value in said droplets is raised.

12. Process according to claim 11, characterized in that the raising of the pH value is effected by adding ammonia and/or an organic amine or by means of a phase transfer catalyst.

13. Process according to claim 12, characterized in that said phase transfer catalyst is an ammonium salt, particularly a tetra(ar)alkylammonium halide.

14. Process for the preparation of oxide particles in the nano-scale range, characterized in that the water and the organic liquid are removed from a suspension prepared according to the process of any one of claims 1 to 13, preferably by (azeotropic) distillation, the particles obtained are dried and optionally calcined.

## Revendications

1. Procédé de préparation d'une suspension contenant des particules d'oxyde à l'échelle nanométrique, dans lequel on émulsionne une phase aqueuse contenant au moins un élément précipitable sous forme d'oxyde (hydrate d'oxyde) neutre, acide ou basique, à l'état dissous, dans un liquide organique, avec formation d'une émulsion du type eau dans huile, et ensuite, en modifiant le pH des gouttelettes d'eau émulsionnées, on provoque la précipitation de l'oxyde (hydrate d'oxyde) dans les gouttelettes, caractérisé en ce qu'on utilise, comme émulsifiant, un mélange d'au moins un émulsifiant non ionique ayant une valeur de HLB inférieure à 7 et au moins un émulsifiant non ionique ayant une valeur de HLB supérieure à 9, la valeur de HLB du mélange résultant d'émulsifiants étant comprise entre 7,5 et 11,5, et en ce que le rapport volumique du mélange d'émulsifiants utilisé à la phase aqueuse est de 2,5:1 à 0,8:1.

2. Procédé selon la revendication 1, caractérisé en ce qu'on utilise au moins un émulsifiant ayant une valeur de HLB inférieure à 5 et en particulier inférieure à 3.

3. Procédé selon l'une quelconque des revendications 1 et 2, caractérisé en ce qu'on utilise au moins un émulsifiant ayant une valeur de HLB supérieure à 10 et en particulier supérieure à 11.

4. Procédé selon l'une quelconque des revendications 1 à 3, caractérisé en ce que la valeur de HLB du mélange résultant d'émulsifiants est comprise entre 8,5 et 10,5, en particulier entre 8,9 et 10.

5. Procédé selon l'une quelconque des revendications 1 à 4, caractérisé en ce que le rapport volumique du mélange d'émulsifiants à la phase aqueuse est compris entre 2:1 et 1:0,9 et en particulier entre 1,5:1 et 1:1.

6. Procédé selon l'une quelconque des revendications 1 à 5, caractérisé en ce que le rapport volumique de la phase aqueuse à la phase huileuse de l'émulsion est de 0,1:1 à 0,5:1 et en particulier de 0,15:1 à 0,3:1.

7. Procédé selon l'une quelconque des revendications 1 à 6, caractérisé en ce qu'on utilise une solution saline comme phase aqueuse, et la concentration de sel dans les gouttelettes d'eau est, de préférence, d'au moins 20 % en poids.

8. Procédé selon l'une quelconque des revendications 1 à 7, caractérisé en ce qu'on utilise, en plus du mélange d'émulsifiants, au moins un alcool aliphatique ayant de 8 à 15 atomes de carbone, de préférence en des quantités de 0,1 à 15 % en volume par rapport à l'émulsion et à un rapport volumique d'au plus 1:1 par rapport au mélange d'émulsifiants.

9. Procédé selon l'une quelconque des revendications 1 à 8, caractérisé en ce que l'élément précipitable sous forme d'oxyde (hydrate d'oxyde) est au moins un élément choisi dans l'ensemble constitué par les métaux alcalino-terreux, en particulier le baryum, les lanthanides, en particulier l'yttrium, les métaux des groupes secondaires, en particulier le titane, le zirconium, le niobium, le tantale et le tungstène, et/ou l'aluminium, l'étain et le plomb.

10. Procédé selon l'une quelconque des revendications 1 à 9, caractérisé en ce qu'on utilise, comme liquide organique, un hydrocarbure aliphatique éventuellement halogéné ou un hydrocarbure aromatique éventuellement halogéné ou un mélange de ceux-ci.

11. Procédé selon l'une quelconque des revendications 1 à 10, caractérisé en ce qu'on fait précipiter (au moins) un oxyde (hydrate d'oxyde) basique ou neutre et qu'on augmente le pH dans les gouttelettes.

12. Procédé selon la revendication 11, caractérisé en ce qu'on effectue l'augmentation du pH en ajoutant de l'ammoniaque et/ou une amine organique ou à l'aide d'un catalyseur de transfert de phase.

13. Procédé selon la revendication 12, caractérisé en ce que le catalyseur de transfert de phase est un sel d'ammonium, en particulier un halogénure de tétra(ar)alkylammonium.

14. Procédé de préparation de particules d'oxyde à l'échelle nanométrique, caractérisé en ce qu'on élimine l'eau et le liquide organique, de préférence par distillation (azéotrope), d'une suspension préparée d'après le procédé selon l'une quelconque des revendications 1 à 13, on sèche les particules obtenues et, éventuellement, on les calcine.
